# NEUE EUROPÄISCHE PATENTSCHRIFT

(11) **EP 1 502 778 B2**
(45) Veröffentlichungstag und Bekanntmachung des Hinweises auf die Entscheidung über den Einspruch: **15.05.2013**
(45) Hinweis auf die Patenterteilung: 14.06.2006
(21) Anmeldenummer: 04016904.7
(22) Anmeldetag: 17.07.2004
(51) Int. Cl.: B60G 17/052, B60T 17/02

(54) **Druckluftaufbereitungseinrichtung für Kraftfahrzeug-Druckluftanlagen**
Compressed air processing system for vehicles
Système de traitement de l'air comprimé pour véhicules

(30) Priorität: 24.07.2003 DE 10333610
(43) Veröffentlichungstag der Anmeldung: 02.02.2005
(73) Patentinhaber: Haldex Brake Products GmbH, 69123 Heidelberg (DE)
(72) Erfinder: Heer, Siegfried, 69168 Wiesloch (DE)
(74) Vertreter: Rehberg Hüppe + Partner

(56) Entgegenhaltungen:
- EP-A- 0 957 018
- EP-A- 1 122 140
- EP-A- 1 464 556
- EP-A2- 0 689 117
- WO-A2-03/008249
- DE-A- 10 245 815
- DE-A- 19 538 339
- DE-A1- 19 530 260
- DE-C1- 19 544 622

## Beschreibung

Die Erfindung bezieht sich auf eine Druckluftaufbereitungseinrichtung für Kraftfahrzeug-Druckluftanlagen. In solchen Druckluftaufbereitungseinrichtungen sind üblicherweise die Elemente eines Druckreglers, eines Lufttrockners, eines Mehrkreisschutzventils mit seinen Überströmventilen zusammengefasst. Eine solche Druckluftaufbereitungseinrichtung weist auch eine elektronische Steuereinheit zum Steuern der Ventile des Druckreglers, des Lufttrockners und des Mehrkreisschutzventils auf.

### STAND DER TECHNIK

Eine Druckluftaufbereitungseinrichtung der eingangs beschriebenen Art ist aus der DE 195 44 621 C1 bekannt. Es wird eine gemeinsame Baueinheit gebildet, in der der Druckregler, der Lufttrockner und ein Mehrkreisschutzventil zusammengefasst sind. Das Mehrkreisschutzventil weist für jeden Kreis ein Überströmventil mit begrenzter Rückströmung auf. Von den Überströmventilen führen Leitungen zu Behältern, die den einzelnen Kreisen zugeordnet sind. Üblicherweise sind die Behälter der Kreise I und II den beiden Kreisen einer Betriebsbremsanlage zugeordnet. Weitere Kreise sind für die Versorgung des Handbremsventils sowie von Nebenaggregaten vorgesehen und ausgebildet. Auf diese Weise kann auch ein fünfter Kreis gebildet sein, der ein Überströmventil des Mehrkreisschutzventils umfasst und der über eine Leitung zu einem Vorratsbehälter führt, an dem die Luftfederung des Kraftfahrzeugs angeschlossen ist. Auf diese Weise wird eine Luftfederanlage mit Druckluft versorgt und abgesichert.

Eine weitere Druckluftaufbereitungseinrichtung ist aus der DE 196 38 226 C1 bekannt. Auch hier ist ein fünfter Kreis gebildet, der einen Vorratsbehälter besitzt, der über ein Überströmventil abgesichert ist.

Aus der DE 100 38 266 A1 ist ein Verfahren zum Auffüllen einer Luftfederanlage über einen Lufttrockner vorgesehen. Allein für die Versorgung und Steuerung der Luftfederanlage ist ein Kompressor und ein nachgeschalteter Lufttrockner vorgesehen. Nach einem Rückschlagventil, welches über eine Drossel überbrückt ist, zweigen Versorgungsleitungen zu steuerbaren Wegeventilen ab, die dem jeweiligen Luftfederbalg vorgeordnet sind. Außerdem ist ein Ablassventil als Bestandteil eines Druckreglers vorgesehen, der auch im Sinne einer Regeneration des Lufttrockners betrieben werden kann. Der Luftfederanlage ist eine elektronische Steuereinrichtung zugeordnet, die ausschließlich die Elemente der Luftfederanlage sowie der zugehörigen Druckluftaufbereitungseinrichtung steuert. Über die Anordnung und Ausbildung einer Bremsanlage werden keine Ausführungen gemacht.

Es ist jedoch auch bereits bekannt, insbesondere Nutzfahrzeuge einerseits mit einer pneumatischen Bremsanlage und andererseits mit einer pneumatischen Luftfederungsanlage auszurüsten. Die Versorgung der Luftfederanlage mit Druckluft wird von einem Kreis der Druckluftaufbereitungseinrichtung abgenommen, der parallel zu den Bremskreisen vorgesehen ist. Die auf diese Weise angeschlossene Luftfederungsanlage besitzt meist mehrere Ventile, die zumindest teilweise als elektrisch ansteuerbare Magnetventile ausgebildet sind. Für die Ansteuerung dieser Magnetventile der Luftfederungsanlage ist eine gesonderte elektronische Steuereinheit vorgesehen. Diese gesonderte elektronische Steuereinheit ist örtlich getrennt von der elektronischen Steuereinheit der Druckluftaufbereitungseinrichtung, beispielsweise im Bereich der Fahrerkabine, vorgesehen, wobei entsprechende elektrische Leitungen zu den Magnetventilen der Luftfederungsanlage führen. Der Bau- und Montageaufwand für die beiden elektronischen Steuereinheiten ist nicht unbeträchtlich. Auch die Anzahl der Anschlüsse, die elektrische Versorgung der beiden elektronischen Steuereinheiten und die Anzahl der pneumatischen Leitungen auf dem Fahrzeug ist relativ groß.

Aus der EP 0 372 218 A2 ist eine pneumatische Luftfederungsanlage bekannt, die einer Druckluftquelle mit Druckluftaufbereitung nachgeschaltet ist und über einen dort abzweigenden Versorgungskreis mit Druckluft versorgt wird. In einem Steuerblock sind drei Ventile angeordnet, die über eine gesonderte elektronische Steuereinrichtung gesteuert werden. Die Ventile sind als direkt gesteuerte Magnetventile ausgebildet, können aber auch als elektromagnetisch vorgesteuerte, pneumatisch betätigte Ventile ausgebildet sein. Es ist ein erstes Ventil vorgesehen, welches zwei Schaltstellungen besitzt und von der Kraft einer Feder in eine Entlüftungsstellung beaufschlagt wird. Die andere Stellung, die durch die elektronische Ansteuerung eingenommen wird, ist eine Stellung, in der die Entlüftung abgesperrt und eine Leitungsverbindung hergestellt wird, so dass am Ausgang dieses Ventils die Druckluft des die Luftfederanlage versorgenden Kreises ansteht. Die Druckluft wird zwei ebenfalls direkt betätigten elektromagnetischen Ventilen zugeleitet, die als Sperrventile ausgebildet sind und der linken und rechten Fahrzeugseite bzw. den dort vorgesehenen Luftfederbälgen zugeordnet ist. In der Nähe der Luftfederbälge sind Wegsensoren vorgesehen, deren Signal zu der gemeinsamen Steuereinrichtung zurückgeführt wird. In den zu den Luftfederbälgen führenden Leitungen sind Drucksensoren angeordnet, deren Signal ebenfalls der gemeinsamen elektronischen Steuereinrichtung zugeleitet wird. Eine solche Luftfederanlage erfordert eine eigene elektronische Steuereinrichtung sowie entsprechende Leitungsverbindungen zu einer Druckluftaufbereitungseinrichtung. Der Bau- und Montageaufwand ist entsprechend hoch.

Aus der EP 1 464 556 A1 ist eine Druckluftaufbereitungseinrichtung für Kraftfahrzeug-Druckluftanlagen bekannt, bei der die elektronische Steuereinheit auch zum Steuern von Ventilen einer Luftfederanlage ausgebildet ist. Die Ventile eines Druckreglers, die Ventile eines Lufttrockners und die Ventile eines Mehrkreisschutzventils sind in einer Baueinheit zusammengefasst. Eine zweite Baueinheit nimmt die Ventile einer Luftfederanlage auf. Die Anzahl der Ventile einer Luftfederanlage richtet sich nach dem Anwendungsfall und dem Fahrzeug. Es ist auch bereits aufgezeigt, dass die Ventile des Druckreglers, die Ventile des Lufttrockners, die Ventile des Mehrkreisschutzventils und die Ventile der Luftfederanlage in einer Baueinheit zusammengefasst sind. Damit sind dann sämtliche der genannten Ventile in einer Baueinheit zusammengefasst. Es bleibt offen, um welche Art von Ventilen es sich dabei handelt. In einer solchen gemeinsamen Baueinheit, in der alle Ventile des Druckreglers, des Lufttrockners, des Mehrkreisschutzventils und der Luftfederanlage gemeinsam untergebracht sind, besteht die Möglichkeit, auch ein Vorsteuerventil zu integrieren, über welches ein Ventil des Mehrkreisschutzventils und ein Ventil der Luftfederanlage gemeinsam angesteuert werden. Die Druckschrift gibt keinen Hinweis darauf, ein besonders ausgebildetes spezielles Ventil der Luftfederanlage in die Druckluftaufbereitungseinrichtung zu integrieren.
Der nächstliegende Stand der Technik WO 03/008249 A2 offenbart eine modulare Druckluftaufbereitungseinrichtung, in welche eine Steuerung für eine Luftfederanlage integriert ist mit dem Ziel, verschiedene elektropneumatische Bauteile, die bei der pneumatischen Aufhängung der Luftfederanlage eine Rolle spielen, in ein und derselben Druckluftaufbereitungseinrichtung zusammenzufassen und andererseits die Steuerlogik dieser Bauteile in die Steuereinheit zu integrieren.
Weiterer Stand der Technik ist aus EP 0 689 117 A2, DE 195 30 260 A1 und DE 195 44 622 C1 bekannt.

### AUFGABE DER ERFINDUNG

Der Erfindung liegt die Aufgabe zugrunde, eine Druckluftaufbereitungseinrichtung der eingangs beschriebenen Art so weiterzubilden, dass der bauliche Aufwand auf einem Kraftfahrzeug für die Druckluftaufbereitung einerseits und die Luftfederanlage andererseits reduziert wird.

### LÖSUNG

Erfindungsgemäß wird dies bei einer Druckluftaufbereitungseinrichtung mit den Merkmalen des Anspruchs 1 erreicht.

### BESCHREIBUNG DER ERFINDUNG

Die Erfindung geht von dem Gedanken aus, statt der bisher voneinander örtlich und funktional getrennten Ausbildung und Anordnung von zwei elektronischen Steuereinheiten abzugehen und eine gemeinsame elektronische Steuereinheit zu schaffen, die sowohl die Funktionen, wie sie für die Druckluftaufbereitung erforderlich sind, als auch die Funktionen für die Versorgung und Steuerung der Luftfederanlage, gemeinsam erbringt. Hieraus resultiert nicht nur eine Reduzierung des Bauaufwands, sondern es werden auch die Anzahl der elektrischen und pneumatischen Verbindungsleitungen reduziert. Die bisher übliche örtliche Trennung wird aufgehoben und es ergibt sich auch die Möglichkeit, die Elemente der gemeinsamen elektronischen Steuereinheit nunmehr mit reduziertem Raumbedarf unterzubringen. Trotz der Zusammenfassung der beiden elektronischen Steuereinheiten zu einer gemeinsamen Einheit können die pneumatischen Elemente der Druckluftaufbereitung einerseits und der Luftfederung andererseits örtlich getrennt voneinander oder auch an gemeinsamer Stelle angeordnet werden, wie dies für den jeweiligen Anwendungsfall vorteilhaft erscheint. Es sind mehrere Integrationsstufen denkbar. Schließlich können auch die elektrischen Elemente der elektronischen Steuereinheit und die pneumatischen Elemente, insbesondere Ventile, der Druckluftaufbereitungseinrichtung einerseits und der Luftfederanlage andererseits in einer Baueinheit integriert werden.

Es ist zumindest ein die Druckluft für die Luftfederanlage bereitstellendes bzw. entlüftendes Schaltventil in die Druckluftaufbereitungseinrichtung integriert. Bei diesem Ventil handelt es sich entweder um ein durch ein Magnetventil vorgesteuertes pneumatisch ansteuerbares Ventil oder um ein direkt elektrisch ansteuerbares Magnetventil. Das Schaltventil weist in allen Fällen zwei Stellungen auf. Die eine Stellung ist eine Entlüftungsstellung, die von einer mechanischen Feder beaufschlagt ist. Die andere Stellung ist eine Durchgangsstellung für Druckluft des Kreises V zu zwei nachgeschalteten Sperrventilen, die der Belüftung, der Entlüftung und der Absperrung belüfteter Bälge dienen. Es können aber auch weitere Elemente bzw. Bestandteile der Luftfederanlage integriert werden, beispielsweise in einem gemeinsamen Gehäuse der Druckluftaufbereitungseinrichtung mit den Elementen des Druckreglers, des Lufttrockners und des Mehrkreisschutzventils sowie der elektronischen Steuereinheit zusammengefasst werden. So ist es möglich, die Ventile des Druckreglers, die Ventile des Lufttrockners, die Ventile des Mehrkreisschutzventils, das Schaltventil und Sperrventile für die zu Luftfederbälgen führenden Leitungen der Luftfederanlage in einer gemeinsamen Baueinheit zusammenzufassen. Diese Baueinheit kann einstückig ausgebildet sein. Es ist aber auch eine modulare Bauweise möglich.

Das Schaltventil kann als pneumatisch schaltbares Ventil ausgebildet sein. Dem Schaltventil ist in diesem Fall ein Magnetventil als Vorsteuerventil zugeordnet, welches elektrisch ansteuerbar ist. Das als Vorsteuerventil eingesetzte Magnetventil ist auch zur Ansteuerung eines weiteren pneumatisch schaltbaren Ventils der Druckluftaufbereitungseinrichtung, nämlich eines Überströmventils des Mehrkreisschutzventils, eingesetzt werden. Dies ist insofern vorteilhaft, als sich dadurch die Anzahl der als Vorsteuerventil anzuordnenden Magnetventile verringert bzw. ohne weiteres ein oder mehrere Magnetventile für mehrere Funktionen genutzt werden können.

Es ist aber auch möglich, dass das Schaltventil als elektrisch direkt schaltbares Ventil ausgebildet ist, wobei das Schaltventil auch zur Ansteuerung eines weiteren pneumatisch schaltbaren Ventils der Druckluftaufbereitungseinrichtung, nämlich eines Überströmventils des Mehrkreisschutzventils, eingesetzt wird. Auch dabei verringert sich die Anzahl der Vorsteuerventile.

Es besteht auch die Möglichkeit, in das Gehäuse der Druckluftaufbereitungseinrichtung oder einen Modul ein Ventil zum willkürlichen Heben, Konstanthalten und Senken des gesamten Fahrzeugaufbaus gegenüber den Achsen zu integrieren. Ein solches Ventil ist insbesondere bei einer Höhenanpassung an eine Beladungsrampe sinnvoll. Die dazu erforderlichen Möglichkeiten bzw. Funktionen können auch von mehreren Ventilen in entsprechender Ansteuerung über die gemeinsame Steuerelektronik erbracht werden.

Weiter besteht die Möglichkeit, dass in die gemeinsame, die Elemente der Druckluftaufbereitungseinrichtung aufnehmende Baueinheit ein Ventil zum Anheben und Absenken einer Liftachse integriert ist. Dabei sind dann zweckmäßig auch zwei Verzweigungsventile zur Versorgung der Luftfederbälge der Liftachse in die Baueinheit integriert. Die Verzweigungsventile dienen der Versorgung der Luftfederbälge der Liftachse. In der einen Stellung, d. h. bei angehobener Liftachse, sind die Luftfederbälge der Liftachse entlüftet, während in der anderen Stellung sämtliche Luftfederbälge mit dem gleichen Druck versorgt werden wie die Triebachse.

Wenn das Fahrzeug mit einer Liftachse ausgestattet ist, empfiehlt es sich, in die gemeinsame, die Elemente der Druckluftaufbereitungseinrichtung aufnehmende Baueinheit auch ein Liftachsventil zu integrieren, welches für das Anheben und Absenken der Liftachse ausgebildet und vorgesehen ist. Auch dieses Liftachsventil entnimmt Druckluft des Kreises V und belüftet bzw. entlüftet einen Hebezylinder, der die Liftachse trägt. Das Liftachsventil erfüllt dann die Funktionen des Ventils zum Anheben und Absenken der Liftachse und der Verzweigungsventile zur Be- und Entlüftung der Luftfederbälge der Liftachse.

In die gemeinsame, die Elemente der Druckluftaufbereitungseinrichtung aufnehmende Baueinheit kann ein eine Querdrossel bereitstellendes Sperrventil für die Luftfederbälge der rechten Fahrzeugseite relativ zu den Luftfederbälgen der linken Fahrzeugseite vorgesehen sein. Das Sperrventil mit Querdrosselung kann entweder der Vorderachse oder auch der Hinterachse zugeordnet sein. Die Querdrossel drosselt den möglichen Luftaustausch zwischen Luftfederbälgen verschiedener Seiten des Fahrzeugs.

In die gemeinsame, die Elemente der Druckluftaufbereitungseinrichtung aufnehmende Baueinheit sind Drucksensoren integriert, die die Drücke in den Luftfederbälgen erfassen und entsprechende Signale an die gemeinsame elektronische Steuereinheit abgeben. Die Anzahl der Drucksensoren kann geringer sein als die Anzahl der Versorgungsleitungen der Luftfederbälge.

Die Erfindung ermöglicht eine modulare Bauweise. Es werden einzelne Module geschaffen, die je nach Anforderung zu einem gemeinsamen Gerät zusammensetzbar sind. Dabei werden beim Zusammenfügen der einzelnen Module sowohl die erforderlichen pneumatischen wie auch die elektrischen Leitungsverbindungen hergestellt. Die Module sind einzeln austauschbar. In der Regel wird ein erster Modul gebildet, der den Lufttrockner, den Druckregler und ein Regenerationsventil aufweist. Ein zweiter Modul nimmt die Elemente des Mehrkreisschutzventils sowie gegebenenfalls Drucksensoren zum Erfassen der Drücke der Kreise I bis IV auf. In einem dritten Modul ist die elektronische Steuereinheit sowie elektrisch ansteuerbare Vorsteuerventile sowie gegebenenfalls Drucksensoren vorgesehen. Die pneumatisch ansteuerbaren Ventile der Luftfederanlage werden in einem vierten Modul vereinigt bzw. aufgenommen. Es ist ein fünfter Modul vorgesehen, der die elektrisch ansteuerbaren Vorsteuerventile aufweist und zusammenfasst.

### KURZBESCHREIBUNG DER FIGUREN

Die Erfindung wird anhand bevorzugter Ausführungsbeispiele weiter erläutert und beschrieben.
- **Fig. 1**: zeigt einen schematischen Schaltplan der Druckluftaufbereitungseinrichtung mit integrierter Luftfederanlage des Kraftfahrzeugs.
- **Fig. 2**: zeigt einen schematisierten Schaltplan betreffend eine zweite Ausführungsform.
- **Fig. 3**: zeigt einen schematisierten Schaltplan betreffend eine dritte Ausführungsform.
- **Fig. 4**: zeigt einen schematisierten Schaltplan betreffend eine nicht vom Wortlaut der Ansprüche umfasste Ausführungsform mit mehreren Modulen.
- **Fig. 5**: zeigt einen schematisierten Schaltplan betreffend eine nicht vom Wortlaut der Ansprüche umfasste Ausführungsform mit mehreren Modulen.
- **Fig. 6**: zeigt einen schematisierten Schaltplan betreffend eine nicht vom Wortlaut der Ansprüche umfasste Ausführungsform.
- **Fig. 7**: zeigt einen schematisierten Schaltplan betreffend eine nicht vom Wortlaut der Ansprüche umfasste Ausführungsform.

### FIGURENBESCHREIBUNG

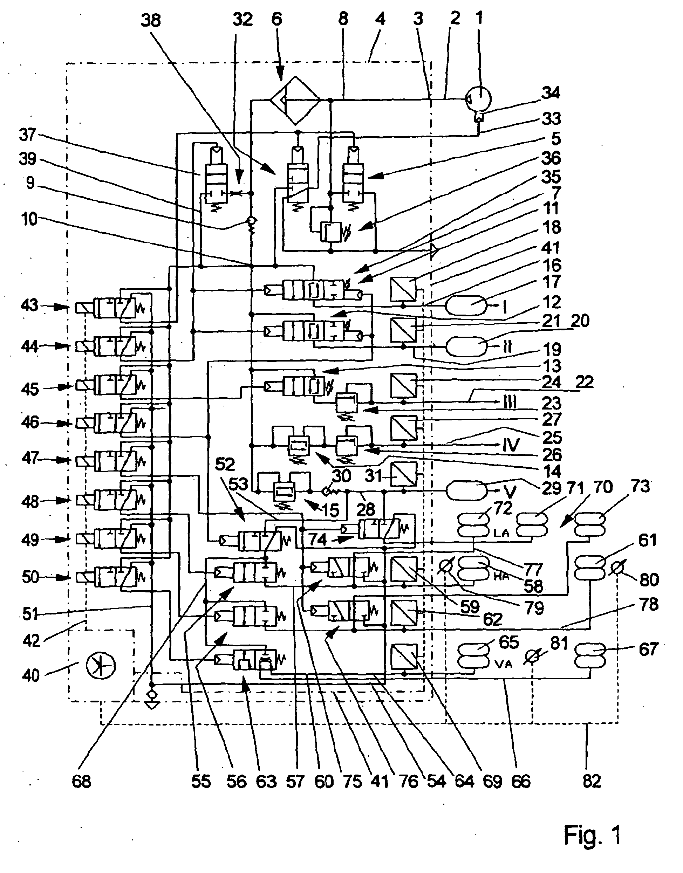

In **Fig. 1****,** wie auch in sämtlichen weiteren Figuren, sind die pneumatischen Elemente, Teile und Leitungen in durchgezogener Linienführung dargestellt, während elektrische Leitungen in gestrichelter Linienführung verdeutlicht sind.

Von einem Kompressor 1 führt eine pneumatische Leitung 2 zu einem Anschluss 3 an einer Baueinheit 4. Die Baueinheit 4 kann insbesondere als gemeinsames Gehäuse ausgebildet sein. In der Baueinheit 4 sind ein Druckregler 5, ein Lufttrockner 6 und ein Mehrkreisschutzventil 7 symbolhaft dargestellt. Diese Elemente sind in an sich bekannter und erforderlicher Weise miteinander verbunden, so dass sie die Funktionen der Druckluftaufbereitung erbringen können.

Von dem Anschluss 3 führt eine Leitung 8 über den Lufttrockner 6 bis zu einem Rückschlagventil 9, an dem die Zentralbelüftung 10 beginnt, also ein Raum, der dem Zyklus des Leerlaufs des Kompressors nicht unterliegt. Über die Zentralbelüftung 10 bzw. entsprechende Leitungsteile erhält ein Überströmventil 11 mit begrenzter Rückströmung, welches dem Kreis I zugeordnet ist, Druckluft. Parallel dazu wird ein Überströmventil 12, welches dem Kreis II zugeordnet ist, mit Druckluft versorgt. Entsprechendes gilt für ein Überströmventil 13 des Kreises III, ein Überströmventil 14 des Kreises IV und ein Überströmventil 15 des Kreises V. Von dem Überströmventil 11 führt eine Leitung 16 zu einem Vorratsbehälter 17 des Kreises I. An die Leitung 16 ist ein Drucksensor 18 angeschlossen. Ebenso führt von dem Überströmventil 12 eine Leitung 19 zu dem Vorratsbehälter 20 des Kreises II. In der Leitung 19 ist ein Drucksensor 21 vorgesehen, der den Druck im Vorratsbehälter 20 überwacht. Die beiden Überströmventile 11 und 12 sind Bestandteil des Mehrkreisschutzventils 7. Die Kreise I und II sind üblicherweise der Versorgung der Betriebsbremse zugeordnet. Die Überströmventile 11 und 12 weisen, wie dargestellt, einen pneumatischen Ansteuerteil auf, mit dem die Überströmventile 11 und 12 auch unterhalb des Öffnungsdruckes in die Offenstellung überführt und dadurch bevorzugt befüllt werden können. Auf der anderen Seite besitzen die Überströmventile 11 und 12 ebenfalls einen pneumatischen Ansteuerteil, der eine vierte Wirkfläche einschließt, die zu einer Sperrstellung der Überströmventile 11 und 12 führt. Diese Sperrstellungen können an den Überströmventilen 11 und 12 beispielsweise dann eingenommen werden, wenn z. B. der Kreis V bevorzugt, insbesondere mit einem vergleichsweise höheren Vorratsdruck, befüllt werden soll.

Von dem Überströmventil 13 des Kreises III zweigt eine Leitung 22 ab, in der ein Druckbegrenzer 23 und ein Drucksensor 24 vorgesehen sind. Auch dieses Überströmventil ist, wie üblich, federbelastet ausgebildet. Es ist pneumatisch ansteuerbar und erreicht so eine Offenstellung auch unabhängig von dem Öffnungsdruck des Überströmventils 13.

Auch der Kreis IV besitzt eine von dem Überströmventil 14 abzweigende Leitung 25, in der ein Druckbegrenzer 26 und ein Drucksensor 27 angeordnet sind. Das Überströmventil 14 ist in normaler Weise als Überströmventil mit begrenzter Rückströmung ausgebildet und besitzt weder eine dritte noch eine vierte Wirkfläche. Der Kreis III kann der Versorgung des Anhängers dienen, während der Kreis IV Nebenverbrauchern zugeordnet ist.

Von dem Überströmventil 15 des Kreises V führt eine Leitung 28 zu dem Vorratsbehälter 29. In der Leitung 28 ist ein Rückschlagventil 30 und ein Drucksensor 31 vorgesehen. Sämtliche Überströmventile 11, 12, 13, 14, 15 sowie die Druckbegrenzer 23 und 26 und das Rückschlagventil 30 sind die wesentlichen Bestandteile des Mehrkreisschutzventils 7, welches hier auch den Kreis V einschließt.

Es ist ein Kompressorsteuerventil 32 vorgesehen, welches pneumatisch ansteuerbar ist und die beiden dargestellten Stellungen aufweist. Das Kompressorsteuerventil 32 wird ebenfalls aus der Zentralbelüftung 10 mit Druckluft versorgt. Von dem Kompressorsteuerventil 32 führt eine Leitung 33 zu einem Schaltelement 34 am Kompressor 1. Andererseits führt eine Entlüftungsleitung 35 zu einer Entlüftungsöffnung an dem Gehäuse bzw. der Baueinheit 4.

Es ist ein Sicherheitsventil 36 vorgesehen, welches eingangsseitig mit dem vom Kompressor 1 gelieferten Druck der Leitung 8 verbunden ist und ausgangsseitig ebenfalls an die Entlüftungsleitung 35 angeschlossen ist. Ebenso führt vom Druckregler 5 eine Verbindungsleitung zur Entlüftungsleitung 35 in die Atmosphäre.

Weiterhin ist ein Regenerationsventil 37 vorgesehen, welches ebenfalls pneumatisch ansteuerbar ist, die zwei dargestellten Stellungen aufweist und dem eine Drossel 38 in einer Umgehungsleitung 39 nachgeschaltet ist, die das Rückschlagventil 9 zum Zweck der Durchführung einer Regeneration des Lufttrockners 6 umgeht.

Es ist eine elektronische Steuereinheit 40 vorgesehen, die als zentrale Steuereinheit für sämtliche Elemente der Luftaufbereitung und der Luftfederung vorgesehen und ausgebildet ist. Durch gestrichelte Linienführung sind elektrische Leitungen 41 erkennbar, über die die Signale der Drucksensoren 18, 21, 24, 27 und 31 der Steuereinheit 40 zugeführt werden.

Die elektronische Steuereinheit 40 verarbeitet die Signale und steuert über elektrische Steuerleitungen 42 eine Reihe von Magnetventilen entsprechend der vorgesehenen Betriebsweisen. Die elektronische Steuereinheit 40 ist zu diesem Zweck entsprechend programmierbar.

Alle Magnetventile sind als Vorsteuerventile ausgebildet. Sie sind elektrisch von der elektronischen Steuereinheit 40 ansteuerbar und wandeln das jeweilige elektrische Signal in ein pneumatisches Signal um, welches zu entsprechend pneumatisch ansteuerbaren Ventilen geführt wird. Es ist ein erstes Magnetventil 43 vorgesehen, welches wie auch alle anderen Magnetventile aus der Zentralbelüftung 10 mit Druckluft versorgt wird. Ausgangsseitig ist eine pneumatische Leitung zu dem Druckregler 5 und dem Kompressorsteuerventil 32 geführt, so dass das Magnetventil 43 als Vorsteuerventil für diese beiden Ventile dient. Es ist ein zweites Magnetventil 44 vorgesehen, welches dem Öffnen der Überströmventile 11 und 12 sowie der Einleitung der Regeneration dient. Dem gemäß führt ausgangsseitig eine pneumatische Steuerleitung zu den Überströmventilen 11 und 12 einerseits und zu dem Regenerationsventil 37 andererseits. Ein drittes Magnetventil 45 dient dem Öffnen des Überströmventils 13 des Kreises III. Ein viertes Magnetventil 46 dient dem Schließen der Überströmventile 11 und 12 der Kreise I und II sowie dem Belüften eines noch zu beschreibenden Schaltventils der Luftfederanlage. Ein fünftes Magnetventil 47 ist für eine Liftachse vorgesehen. Ein sechstes Magnetventil 48 dient als Vorsteuereinheit für noch zu beschreibende Sperrventile z. B. der linken Fahrzeugseite. Ein siebtes Magnetventil 49 ist ein Vorsteuerventil für entsprechende Sperrventile der rechten Fahrzeugseite und ein Magnetventil 50 dient der Vorsteuerung eines Sperrventils der Vorderachse des Fahrzeugs. Sämtliche Magnetventile 43 bis 50 sind identisch ausgebildet und besitzen die zwei dargestellten Stellungen. In der einen Stellung haben sämtliche Magnetventile ausgangsseitig über eine Entlüftungsleitung 51 Verbindung zur Atmosphäre. Dies stellt gleichzeitig die stromlos eingenommene Stellung der Magnetventile dar. Während die Magnetventile 43 bis 46 im Wesentlichen den Elementen der Druckluftaufbereitung zugeordnet sind, handelt es sich bei den Magnetventilen 47 bis 50 um Vorsteuerventile für Elemente der Luftfederanlage.

Wesentliches Element der Luftfederanlage ist ein Schaltventil 52. An dem Schaltventil 52 steht über eine Leitung 53 Druckluft aus dem Behälter 29, also nach dem Rückschlagventil 30, an. In der drucklosen Stellung ist die Leitung 53 abgesperrt. Eine Entlüftungsleitung 54 führt zur Entlüftungsleitung 51 bzw. zur Atmosphäre. Das Schaltventil 52 als wesentliches Teil einer Entlüftungsanlage ist integriert in der Baueinheit 4 der Druckluftaufbereitungseinrichtung angeordnet. Es dient dazu, Druckluft des Kreises V an nachgeschalteten Sperrventilen 55 und 56 bereitzustellen. Die Sperrventile 55 und 56 besitzen eine Sperrstellung und eine Durchgangsstellung. In drucklosem Zustand wird durch die Kraft einer Feder jeweils die Sperrstellung eingenommen. Das Sperrventil 55 möge der linken Fahrzeugseite zugeordnet sein und wird über das Magnetventil 48 vorgesteuert. Dem gemäß führt eine Leitung 57 zu Luftfederbälgen 58, die der linken Seite einer Hinterachse zugeordnet sind. Diese Hinterachse ist als Triebachse ausgebildet. Ein Drucksensor 59 überwacht den Druck in den Luftfederbälgen 58 und sendet über die elektrische Leitung 41 ein entsprechendes elektrisches Signal an die elektronische Steuereinheit 40. Entsprechend führt von dem Sperrventil 56 eine Leitung 60 zu einem Luftfederbalg 61, der der angetriebenen Hinterachse auf der rechten Seite des Fahrzeugs zugeordnet sein möge. Auch hier ist ein Drucksensor 62 vorgesehen. Das Sperrventil 56 wird über das Magnetventil 49 vorgesteuert.

Es ist weiterhin ein Sperrventil 63 vorgesehen, welches einer Vorderachse zugeordnet ist. Das Sperrventil 63 weist die beiden dargestellten Stellungen auf. Es wird über das Magnetventil 50 vorgesteuert. In drucklosem Zustand verbindet es über eine Querdrossel eine Leitung 64 zu einem Luftfederbalg 65 auf der linken Seite des Fahrzeugs an der Vorderachse mit einer Leitung 66, die zu Luftfederbälgen 67 auf der rechten Seite des Fahrzeugs im Bereich der Vorderachse führt. In der anderen Stellung verbindet das Sperrventil 63 die beiden Leitungen 64 und 66 mit einer Leitung 68, über die durch das Schaltventil 52 bereitgestellte Druckluft des Kreises V weitergeleitet wird. Ein Drucksensor 69 dient der Überwachung des Druckes in den Luftfederbälgen 65 und 67.

Für den Fall, dass eine Liftachse vorgesehen ist, weist diese einen Liftbalg 71, Luftfederbälge 72 auf der linken Fahrzeugseite und Luftfederbälge 73 auf der rechten Fahrzeugseite auf. Es ist ein Ventil 74 vorgesehen, welches der Ansteuerung des Liftbalgs 71 der Liftachse 70 dient und mit dem die Liftachse 70 angehoben bzw. abgesenkt wird. Das Ventil 74 zum Heben und Senken der Liftachse 70 wird über das Magnetventil 47 vorgesteuert. An dem Ventil 74 steht ebenfalls Druckluft aus dem Vorratsbehälter 29 des Kreises V an.

Zu der Liftachse 70 gehören weiterhin zwei Verzweigungsventile 75 und 76, die ebenfalls über das Magnetventil 47 vorgesteuert werden. Von dem Verzweigungsventil 75 führt eine Leitung 77 zu den Luftfederbälgen 72. Von dem Verzweigungsventil 76 führt eine Leitung 78 zu dem Luftfederbalg 73. In der einen Stellung der Verzweigungsventile 75 und 76 besteht Verbindung zwischen den Luftfederbälgen 58 und 72 einerseits und 61 und 73 andererseits. Dies ist die Stellung bei abgesenkter Liftachse, in der die Luftfederbälge 58, 61, 72, 73 gleichen Druck haben. In der anderen Stellung, also bei angehobener Liftachse 70, führt ausgangsseitig die Entlüftungsleitung 54 zur Atmosphäre. Ein Wegsensor 79 ist den Luftfederbälgen 72 der Liftachse 70 auf der linken Seite zugeordnet. Entsprechend ist ein Wegsensor 80 für die Luftfederbälge 73 der Liftachse 70 auf der rechten Seite vorgesehen ein Wegsensor 81 ist der Vorderachse zugeordnet. Entsprechende elektrische Signale werden über eine elektrische Leitung 82 der elektronischen Steuereinheit 40 zugeleitet.

Je nach der Programmierung der Steuereinheit 40 sind verschiedene Betriebsweisen möglich. In der Lastlaufphase des Kompressors wird Druckluft über den Lufttrockner 6 und das Rückschlagventil 9 der Zentralbelüftung 10 zugeführt. Es kann eine bevorzugte Befüllung der Behälter 17 und 20 der Kreise I und II herbeigeführt werden, indem die Überströmventile 11 und 12 durch das Magnetventil 44 geöffnet werden. Die ordnungsgemäße Befüllung der einzelnen Kreise I bis IV wird über die Drucksensoren überwacht, wobei die Überströmventile 11 und 12 über das Magnetventil 46 in die Schließstellung überführt werden können, wenn der vorgesehene Druck erreicht ist. Es folgt dann in der Regel die Befüllung des Vorratsbehälters 29 des Kreises V mit einem erhöhten Druck, beispielsweise in der Größenordnung von 12 bis 15 bar. Dieser Vorratsdruck steht auch an den Sperrventilen 55 und 56 an, da das Schaltventil 52 durch das Magnetventil 46 in die Durchgangsstellung überführt worden ist. Wenn die Wegsensoren 79, 80 und 81 eine Abweichung des Fahrzeugaufbaus von der Normallage feststellen und entsprechende Signale an die Steuereinheit 40 abgeben, wird Druckluft über die Sperrventile 55, 56 und 63 in die entsprechenden Luftfederbälge geschickt. Dies geschieht über eine Vorsteuerung mit den Magnetventilen 48, 49 und 50. Bei entsprechender Beladung wird auch die Liftachse 70 durch Entlüftung des Liftbalges 71 abgesenkt und die Luftfederbälge 72 und 73 der Liftachse 70 mit den Bälgen 58 bzw. 61 der Hinterachse verbunden. Insoweit sind sämtliche Ventile und Elemente der Luftfederanlage in der gemeinsamen Baueinheit 4 der Druckluftaufbereitungseinrichtung integriert angeordnet.

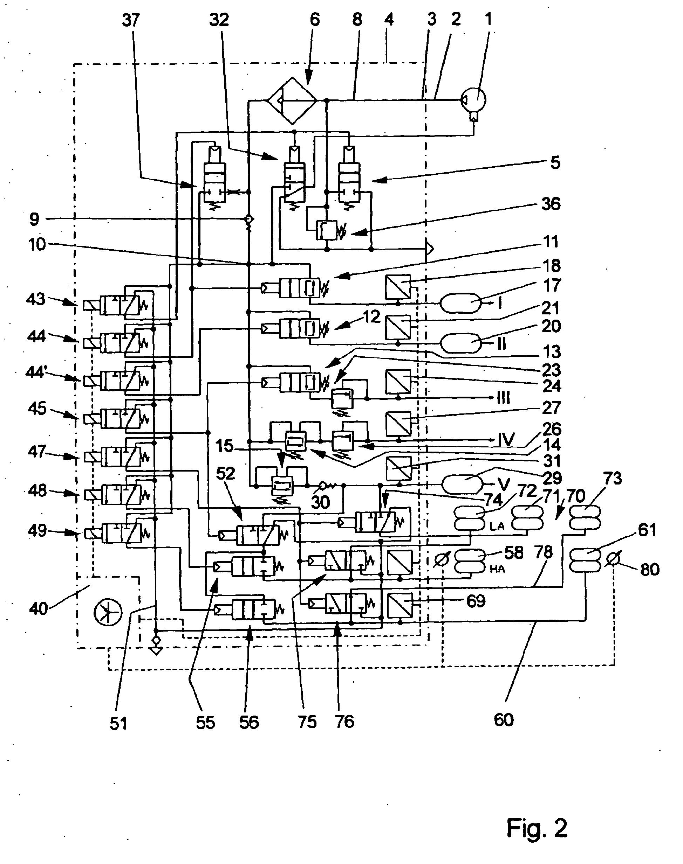

**Fig. 2** zeigt eine Ausführungsform, die in weiten Bereichen der Ausführungsform der Fig. 1 entspricht, weshalb in Aufbau und Wirkungsweise hierauf verwiesen werden kann. Abweichend davon dient das Magnetventil 44 nur der Vorsteuerung des Überströmventils 11 des Kreises I. Für die Vorsteuerung des Überströmventils 12 des Kreises II ist ein weiteres Magnetventil 44' vorgesehen. Das Magnetventil 45 dient nicht nur als Vorsteuerventil des Überströmventils 13 des Kreises III, sondern auch als Vorsteuerventil des Schaltventils 52. Die Überströmventile 11 und 12 besitzen keine vierte Wirkfläche und damit auch keine Sperrstellung. Es ist nur eine Hinterachse und eine Liftachse 70 vorgesehen. Eine Vorderachse ist hier nicht vorhanden. Dem gemäß fehlt auch das Sperrventil 63.

Die Funktion ist aus sich heraus verständlich.

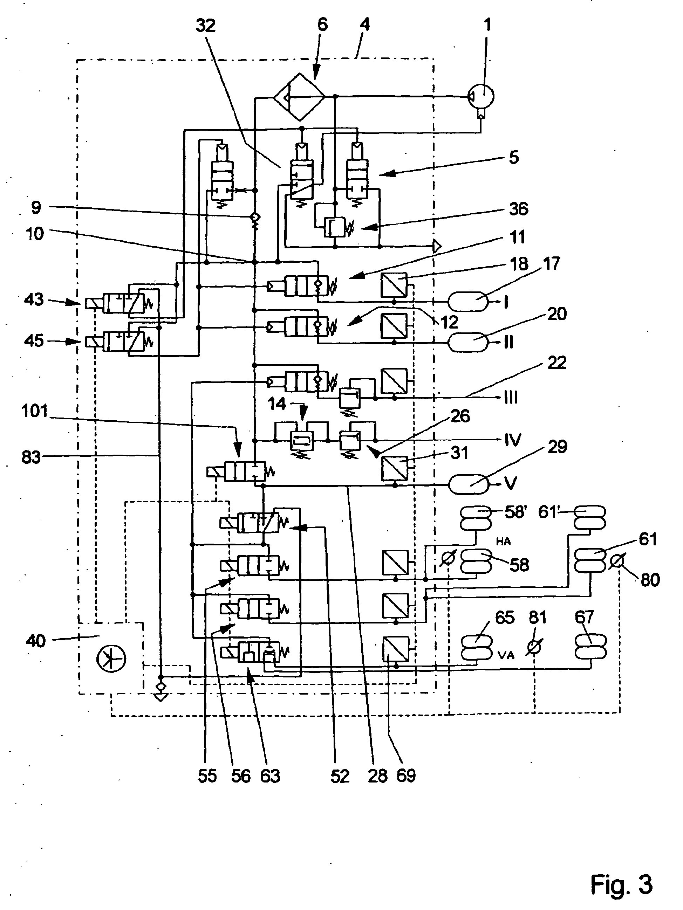

Die in **Fig. 3** gezeigte Anlage fasst in der Baueinheit 4 auch wiederum Elemente der Druckluftaufbereitungseinrichtung einerseits sowie der Luftfederung andererseits zusammen. Es sind hier jedoch nur die Magnetventile 43 und 44 als Vorsteuerventile vorgesehen. Die Überströmventile 11 und 12 besitzen keine vierte Wirkfläche. Die Überströmventile 11, 12 und 13 sind als entsperrbare Rückschlagventile ausgebildet. In der zu dem Vorratsbehälter 29 des Kreises V führenden Leitung 28 ist anstelle des Überströmventils 15 ein elektrisch ansteuerbares direkt schaltendes Sperrventil 101 vorgesehen, an dem Druckluft aus der Zentralbelüftung 10 ansteht. Die Steuereinheit 40 steuert das Sperrventil 101 direkt an und überführt dieses nach ordnungsgemäßer Befüllung des Vorratsbehälters 29 in die Schließstellung. Damit steht Druckluft aus dem Vorratsbehälter 29 auch an dem Schaltventil 52 an, welches direkt von der Steuereinheit 40 geschaltet wird. Von der ausgangsseitig zu den Sperrventilen 55 und 56 führenden Leitung zweigt eine pneumatische Steuerleitung 83 ab, über die das Überströmventil 13 des Kreises III vorgesteuert wird. Das Schaltventil 52 übernimmt hierbei gleichsam die Funktion eines Vorsteuerventils für das Überströmventil 13.

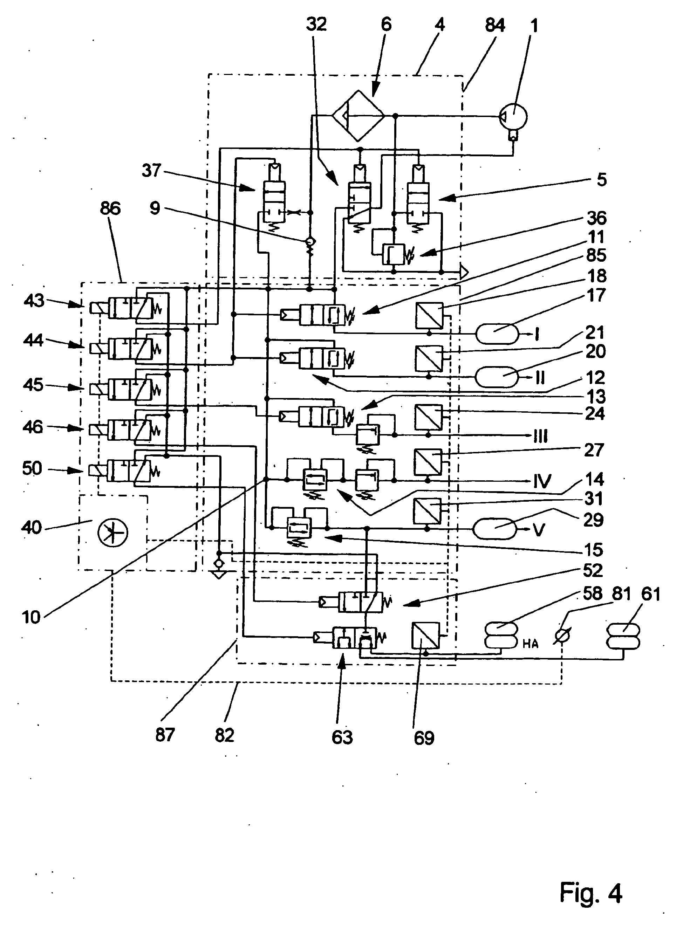

**Fig. 4** zeigt einen modularen Aufbau der Baueinheit 4. Es ist ein erster Modul 84 vorgesehen, der den Druckregler 5, den Lufttrockner 6, das Kompressorsteuerventil 32, das Sicherheitsventil 36 und das Regenerationsventil 37 sowie das Rückschlagventil 9 aufnimmt. Ein zweiter mit dem ersten Modul 84 verbindbarer Modul 85 nimmt die Überströmventile 11, 12, 13, 14, 15, die Drucksensoren 18, 21, 24, 27, 31 und die Druckbegrenzer 23 und 26 auf. Ein dritter Modul 86 nimmt verschiedene Magnetventile sowie die elektronische Steuereinheit 40 auf. Ein vierter Modul 87 enthält das Schaltventil 52 sowie das Sperrventil 63 und den Drucksensor 69. Es ist, wie ersichtlich, hier nur eine Hinterachse mit den Luftfederbälgen 58 und 61 dargestellt, so dass der Modul 87 entsprechend einfach ausgebildet ist. Es ist leicht vorstellbar, wie auch die Ausführungsformen der Fig. 1 bis 3 in modularer Bauweise aufgebaut sein können, wobei eine entsprechende Aufteilung der Elemente in die einzelnen Module erfolgt, damit letztendlich Baueinheiten 4 zusammenstellbar sind, wie sie je nach Anforderung benötigt werden. Weiterhin ist vorstellbar, dass einzelne Elemente eines Moduls einem anderen Modul zugeordnet werden. Beispielsweise können die Drucksensoren 18, 21, 24, 27 und 31 des Moduls 85 in dem Modul 86 angeordnet sein.

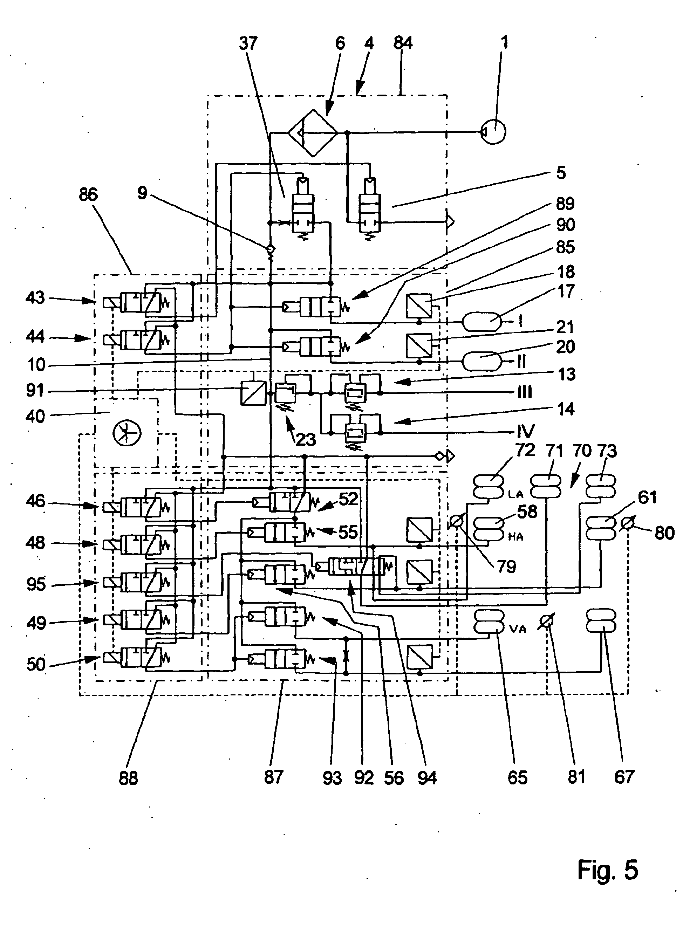

**Fig. 5** zeigt eine weitere Möglichkeit eines modularen Aufbaus der Baueinheit 4. Der erste Modul 84 nimmt den Druckregler 5, den Lufttrockner 6, das Regenerationsventil 37 und das Rückschlagventil 9 auf. Im zweiten Modul 85 sind an der Stelle der Überströmventile 11 und 12 pneumatisch vorsteuerbare Sperrventile 89 und 90 vorgesehen sowie die zugehörigen Drucksensoren 18 und 21. Der Kreis III weist das Überströmventil 13 auf, dem hier jedoch der Druckbegrenzer 23 vorgeschaltet ist, der gemeinsam auch das Überströmventil 14 des Kreises IV beeinflusst. Ein Drucksensor 91 überwacht den Druck in der Zentralbelüftung 10. In dem dritten Modul 86 sind die beiden Magnetventile 43 und 44 für die Steuerung des Druckreglers einerseits bzw. der Sperrventile 89 und 90 sowie die elektronische Steuereinheit 40 vorgesehen. Der vierte Modul 87 fasst Elemente der Luftfederanlage zusammen, so das Schaltventil 52 und die beiden Sperrventile 55 und 56 der Hinterachse. Für die Steuerung der Luftfederbälge 65 und 67 der Vorderachse sind zwei Sperrventile 92 und 93 vorgesehen. Weiterhin ist im Modul 87 ein Liftachsventil 94 integriert, welches die Aufgabe hat, die Liftachse 70 anzuheben bzw. abzusenken und die Liftbälge 72 und 73 der Liftachse 70 zu versorgen. Es fällt auf, dass hier ein Schutzventil für den Kreis V und ein Vorratsbehälter 29 entfallen sind.

In einem weiteren Modul 88 sind verschiedene Magnetventile als Vorsteuerventile zusammengefasst bzw. untergebracht. Das Magnetventil 46 dient der Vorsteuerung des Schaltventils 52. Das Magnetventil 48 steuert das Sperrventil 55 vor. Das Magnetventil 49 steuert das Sperrventil 56 vor. Ein Magnetventil 95 dient der Vorsteuerung des Liftachsventils 94. Das Magnetventil 50 steuert schließlich die beiden Sperrventile 92 und 93 der Vorderachse vor. Im Übrigen sind die aus Fig. 5 erkennbaren Leitungsverbindungen vorhanden, so dass sich für einen Fachmann die entsprechende Wirkungsweise ohne weiteres erschließt.

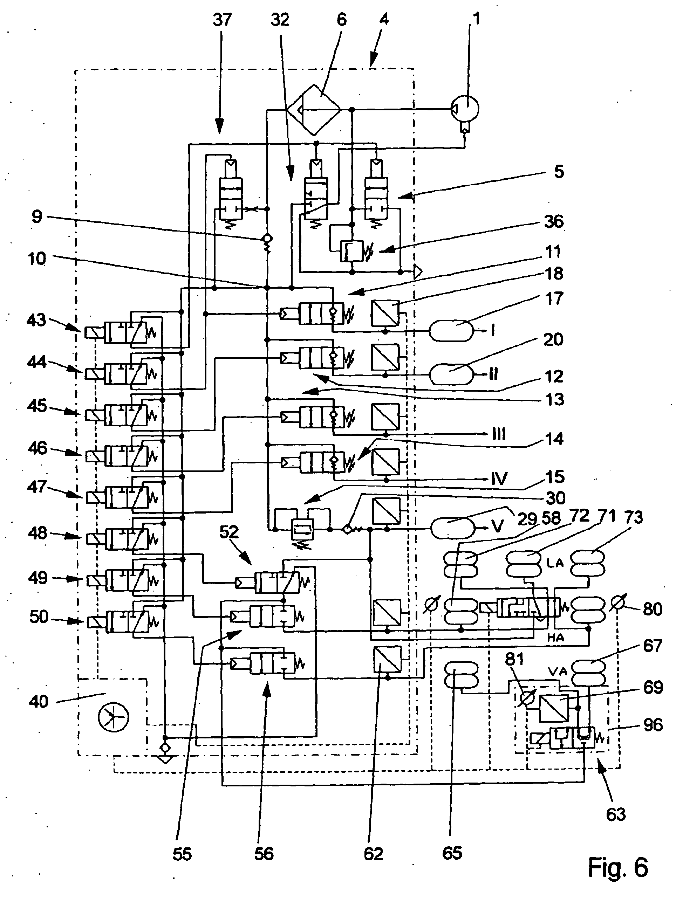

**Fig. 6** verdeutlicht eine weitere Ausführungsform, bei der die Elemente der Druckluftaufbereitung und der Luftfederanlage weitgehend innerhalb einer gemeinsamen Baueinheit 4 untergebracht sind. Die Überströmventile 11 bis 14 sind hier als entsperrbare vorgesteuerte Rückschlagventile ausgebildet. In der Baueinheit 4 ist das Umschaltventil 52 und die Sperrventile 55 und 56 integriert untergebracht, ebenso die Magnetventile 43 bis 50, die als Vorsteuerventile dienen. Außerhalb der Baueinheit 4 ist das Sperrventil 63 innerhalb einer dort vorgesehenen Baueinheit 96 untergebracht, die auch den Wegsensor 81 sowie den Drucksensor 69 aufnimmt. Die Baueinheit 96 ist der Vorderachse zugeordnet. Auch das Liftachsventil 94 befindet sich bei dieser Ausführungsform in der Nähe der Luftfederbälge 58 und 61 der Hinterachse. Eine Ansteuerung erfolgt über die entsprechenden elektrischen Leitungsverbindungen von der elektronischen Steuereinheit 40 her.

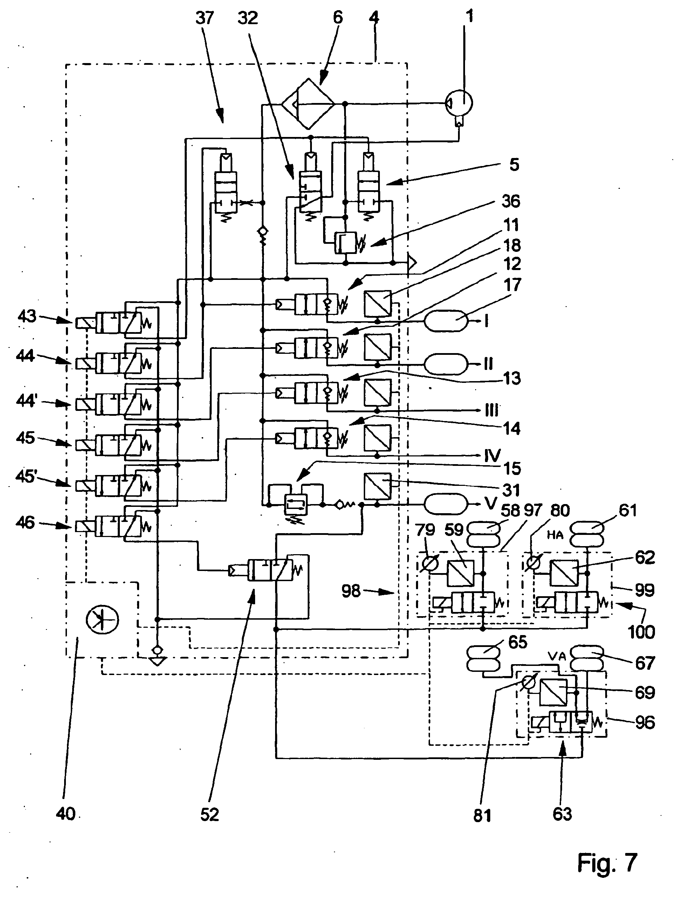

Bei der Ausführungsform der **Fig. 7** sind in einer Baueinheit 4 wesentliche Elemente der Druckluftaufbereitungseinrichtung vorgesehen. Die Überströmventile 11 bis 14 sind als entsperrbare vorgesteuerte Rückschlagventile ausgebildet. Der Kreis V weist ein normales Überströmventil 15 mit begrenzter Rückströmung auf. Das Schaltventil 52 der Luftfederanlage ist auch hier innerhalb der Baueinheit 4 integriert angeordnet. In einer Baueinheit 96 sind das der Vorderachse zugeordnete Sperrventil 63, der Drucksensor 69 und der Wegsensor 61 vorgesehen. Dem Luftfederbalg 58 der linken Fahrzeugseite ist eine Baueinheit 97 zugeordnet. Die Baueinheit 97 nimmt ein Sperrventil 98, den Drucksensor 59 und den Wegsensor 79 auf. Eine Baueinheit 99 nimmt ein Sperrventil 100, den Drucksensor 62 und den Wegsensor 80 auf, die den Luftfederbälgen 61 der rechten Fahrzeugseite der Hinterachse zugeordnet sind. Weiterhin sind entsprechende Magnetventile 43, 44, 44', 45, 45' und 46 integriert angeordnet. Das Magnetventil 44' dient der Vorsteuerung des Überströmventils 12 des Kreises II. Das Magnetventil 45' dient der Vorsteuerung des Überströmventils 14 des Kreises III, ebenfalls ausgebildet als entsperrbares Rückschlagventil.

### BEZUGSZEICHENLISTE

- 1: Kompressor
- 2: Leitung
- 3: Anschluss
- 4: Baueinheit
- 5: Druckregler
- 6: Lufttrockner
- 7: Mehrkreisschutzventil
- 8: Leitung
- 9: Rückschlagventil
- 10: Zentralbelüftung

- 11: Überströmventil
- 12: Überströmventil
- 13: Überströmventil
- 14: Überströmventil
- 15: Überströmventil
- 16: Leitung
- 17: Vorratsbehälter
- 18: Drucksensor
- 19: Leitung
- 20: Vorratsbehälter

- 21: Drucksensor
- 22: Leitung
- 23: Druckbegrenzer
- 24: Drucksensor
- 25: Leitung
- 26: Druckbegrenzer
- 27: Drucksensor
- 28: Leitung
- 29: Vorratsbehälter
- 30: Rückschlagventil

- 31: Drucksensor
- 32: Kompressorsteuerventil
- 33: Leitung
- 34: Schaltelement
- 35: Entlüftungsleitung
- 36: Sicherheitsventil
- 37: Regenerationsventil
- 38: Drossel
- 39: Umgehungsleitung
- 40: elektronische Steuereinheit

- 41: elektrische Leitung
- 42: elektrische Steuerleitung
- 43: Magnetventil
- 44: Magnetventil
- 45: Magnetventil
- 46: Magnetventil
- 47: Magnetventil
- 48: Magnetventil
- 49: Magnetventil
- 50: Magnetventil

- 51: Entlüftungsleitung
- 52: Schaltventil
- 53: Leitung
- 54: Entlüftungsleitung
- 55: Sperrventil
- 56: Sperrventil
- 57: Leitung
- 58: Luftfederbalg
- 59: Drucksensor
- 60: Leitung

- 61: Luftfederbalg
- 62: Drucksensor
- 63: Sperrventil
- 64: Leitung
- 65: Luftfederbalg
- 66: Leitung
- 67: Luftfederbalg
- 68: Leitung
- 69: Drucksensor
- 70: Liftachse

- 71: Liftbalg
- 72: Luftfederbalg
- 73: Luftfederbalg
- 74: Ventil
- 75: Verzweigungsventil
- 76: Verzweigungsventil
- 77: Leitung
- 78: Leitung
- 79: Wegsensor
- 80: Wegsensor

- 81: Wegsensor
- 82: elektrische Leitung
- 83: pneumatische Steuerleitung
- 84: Modul
- 85: Modul
- 86: Modul
- 87: Modul
- 88: Modul
- 89: Sperrventil
- 90: Sperrventil

- 91: Drucksensor
- 92: Sperrventil
- 93: Sperrventil
- 94: Liftachsventil
- 95: Magnetventil
- 96: Baueinheit
- 97: Baueinheit
- 98: Sperrventil
- 99: Baueinheit
- 100: Sperrventil
- 101: Sperrventil

## Patentansprüche

1. Druckluftaufbereitungseinrichtung mit einem Druckregler (5), einem Lufttrockner (6), einem Mehrkreisschutzventil (7) und einer elektronischen Steuereinheit (49) zum Steuern des Druckreglers (5), des Lufttrockners (6) und des Mehrkreisschutzventils (7), wobei die elektronische Steuereinheit (40) der Druckluftaufbereitungseinrichtung auch zum Steuern von Ventilen einer Luftfederanlage ausgebildet ist, und dass ein Druckluft für die Luftfederungsanlage bereitstellendes bzw. entlüftendes Schaltventil (52) in die Druckluftaufbereitungseinrichtung integriert ist, *wobei*
a) *das Schaltventil (52) als pneumatisch schaltbares Ventil ausgebildet ist und dem Schaltventil (52) ein Magnetventil (46) als Vorsteuerventil zugeordnet ist und das Magnetventil auch zur Ansteuerung eines weiteren pneumatisch schaltbaren Überströmventils (11, 12, 13) des Mehrkreisschutzventils (7) der Druckluftaufbereitungseinrichtung eingesetzt wird, oder*
*b) das Schaltventil (52) als elektrisch direkt schaltbares Ventil ausgebildet ist und das Schaltventil (52) auch zur Ansteuerung eines weiteren pneumatisch schaltbaren Überströmventils (11, 12, 13) des Mehrkreisschutzventils (7) der Druckluftaufbereitungseinrichtung eingesetzt wird.*

2. Druckluftaufbereitungseinrichtung nach Anspruch 1, **dadurch gekennzeichnet, dass** in die gemeinsame, die Elemente der Druckluftaufbereitungseinrichtung aufnehmende Baueinheit (4) ein Ventil (74) zum Anheben und Absenken einer Liftachse (70) integriert ist, und dass zwei Verzweigungsventile (75, 76) zur Versorgung der Luftfederbälge (72, 73) der Liftachse (70) in die Baueinheit (4) integriert sind.

3. Druckluftaufbereitungseinrichtung nach Anspruch 1 oder 2, **dadurch gekennzeichnet, dass** in die gemeinsame, die Elemente der Druckluftaufbereitungseinrichtung aufnehmende Baueinheit (4) ein Liftachsventil (94) integriert ist.

4. Druckluftaufbereitungseinrichtung nach mindestens einem der Ansprüche 1 bis 3, **dadurch gekennzeichnet, dass** in die gemeinsame, die Elemente der Druckluftaufbereitungseinrichtung aufnehmende Baueinheit (4) ein eine Querdrossel bereitstellenden Sperrventil (63) für die Luftfederbälge einer Vorderachse oder einer Hinterachse integriert ist.

5. Druckluftaufbereitungseinrichtung nach mindestens einem der Ansprüche 1 bis 4, **dadurch gekennzeichnet, dass** in die gemeinsame, die Elemente der Druckluftaufbereitungseinrichtung aufnehmende Baueinheit (4) Drucksensoren (18, 21, 24, 27, 31, 91) integriert sind, die die Drücke in den Luftfederbälgen erfassen und entsprechende Signale an die gemeinsame elektronische Steuereinheit (40) abgeben.

6. Druckluftaufbereitungseinrichtung nach einem oder mehreren der Ansprüche 1 bis 5, **dadurch gekennzeichnet, dass** die pneumatisch schaltbaren Ventile der Luftfederanlage und entsprechende Vorsteuerventile in einer einen Modul bildenden Baueinheit zusammengefasst sind, wobei dieser Modul mit einem die Elemente der Druckluftaufbereitungseinrichtung aufnehmenden Modul zusammenfügbar ist.

7. Druckluftaufbereitungseinrichtung nach einem oder mehreren der Ansprüche 1 bis 6, **dadurch gekennzeichnet, dass** ein erster Modul (84), der den Lufttrockner (6), den Druckregler (5) und ein Regenerationsventil (37) aufweist, ein zweiter Modul (85), der das Mehrkreisschutzventil (7) sowie gegebenenfalls Drucksensoren (18, 21, ..) zum Erfassen der Drücke der Kreise I bis IV aufweist, ein dritter Modul (86), der die elektronische Steuereinheit (40) sowie elektrisch ansteuerbare Vorsteuerventile (43, 44) aufweist, ein vierter Modul (87), der pneumatisch ansteuerbare Ventile der Luftfederanlage aufweist, und ein fünfter Modul (88), der die elektrisch ansteuerbaren Vorsteuerventile (46, 48, 95, 49, 50) aufweist, vorgesehen ist.

## Claims

1. Compressed air processing apparatus, comprising a pressure controller (5), an air dryer (6), a multi-circuit protection valve (7) and an electronic control unit (40), the electronic control unit being designed and arranged to control the pressure controller (5), the air dryer (6) and the multi-circuit protection valve (7), wherein the electronic control unit (40) is designed and arranged to control switching valves of an air suspension system also, and a switching valve (52) being designed and arranged to supply compressed air to the air suspension system and to vent the air suspension system, respectively, is arranged in the compressed air processing apparatus wherein
a) the switching valve (52) is designed as a pneumatically switchable valve and a solenoid valve (46) is assigned to the switching valve (52) as a pre-control valve and wherein the solenoid valve is also used to control an additional pneumatically switchable overflow valve (11, 12, 13) of the multi-circuit protection valve (7) of the compressed air processing apparatus or
b) the switching valve (52) is built by an electrically directly switchable valve and the switching valve (52) is also used for controlling an additional pneumatically switchable overflow valve (11, 12, 13) of the multi-circuit protection valve (7) of the compressed air processing apparatus.

2. Compressed air processing apparatus of claim 1, **characterized in that** a valve (74) for lifting and lowering a lifting axle (70) is arranged in the common structural unit (4), the structural unit housing the elements of the compressed air processing apparatus, and **in that** two branching off valves (75, 76) being designed and arranged to supply compressed air to air suspension bellows (72, 73) of the lifting axle (70) are arranged in the structural unit (4).

3. Compressed air processing apparatus of claim 1 or 2, **characterized in that** a lifting axle valve (94) is arranged in the common structural unit (4) housing the elements of the compressed air processing apparatus.

4. Compressed air processing apparatus of one of claims 1 to 3, **characterized in that** a locking valve (63) is arranged in the common structural unit (4) to cooperate with air suspension bellows of a front or a rear axle of a motor vehicle, the locking valve being designed and arranged to act as a transverse throttle, the common structural unit (4) housing the elements of the compressed air processing apparatus.

5. Compressed air processing apparatus of at least one of the claims 1 to 4, **characterized in that** a plurality of pressure sensors (18, 21, 24, 27, 31, 91) is arranged in the common structural unit (4), the pressure sensors being designed and arranged to determine the pressure in air suspension bellows and to transmit respective signals to the common electronic control unit (40), the common structural unit (4) housing the elements of the compressed air processing apparatus.

6. Compressed air processing apparatus at least of one of the claims 1 to 5, **characterized in that** the pneumatically switchable valves of the air suspension system and respective pre-control valves are arranged in a common structural unit, the common structural unit being designed as a first module, the first module being connectable with a module containing the components of the compressed air processing apparatus.

7. Compressed air processing apparatus at least of one of the claims 1 to 6, **characterized in that** a first module (84) housing the air dryer (6), the pressure controller (5) and a regeneration valve (37), and a second module (85) housing the multi-circuit protection valve (7) and the pressure sensors (18, 21, 24, 27, 31, 91) to determine the pressure in the circuits I to IV if arranged, and a third module (86) housing the electronic control unit (40) and electrically controllable pre-control valves (43, 44), and a fourth module (87) housing the pneumatically controllable valves of an air suspension system, and a fifth module (88) housing the electrically controllable pre-control valves (46, 48, 95, 49, 50) are provided.

## Revendications

1. Système de traitement d'air comprimé comprenant un régulateur de pression (5), un déshydrateur d'air (6), une vanne de protection à plusieurs circuits (7) et une unité de commande électronique (40) pour la commande du régulateur de pression (5), du déshydrateur d'air (6) et de la vanne de protection à plusieurs circuits (7), l'unité de commande électronique (40) du dispositif de traitement d'air étant conçue également pour la commande de vannes d'une installation à ressort pneumatique, et une vanne de commutation (52) fournissant et purgeant l'air comprimé pour l'installation à ressort pneumatique est intégrée dans le système de traitement d'air comprimé dans lequel
a) la vanne de commutation (52) est conçue comme une vanne commutable de façon pneumatique, et une vanne magnétique (46) est associée à la vanne de commutation (52) en tant que vanne pilote et la vanne magnétique est utilisée également pour l'activation d'une autre soupape de décharge (11, 12, 13), commutable de façon pneumatique, de la vanne de protection à plusieurs circuits (7) du système de traitement d'air comprimé, ou
b) la vanne de commutation (52) est conçue comme une vanne pouvant être commutée directement au plan électrique, et la vanne de commutation (52) est utilisée également pour l'activation d'une autre soupape de décharge (11, 12, 13), commutable de façon pneumatique, de la vanne de protection à plusieurs circuits (7) du système de traitement d'air comprimé.

2. Système de traitement d'air comprimé la revendication 1, **caractérisé en ce que** dans l'ensemble commun (4), recevant les éléments du dispositif de traitement d'air comprimé, est intégrée une vanne (74) pour l'élévation et l'abaissement d'un essieu élévateur (70), et **en ce que** deux vannes de dérivation (75, 76) pour l'alimentation des soufflets pneumatiques (72, 73) de l'essieu régulateur (70) sont intégrées dans l'ensemble (4).

3. Système de traitement d'air comprimé selon la revendication 1 ou 2, **caractérisé en ce qu'**une vanne d'essieu élévateur (94) est intégrée dans l'ensemble commun (4), recevant les éléments du système de traitement d'air comprimé.

4. Système de traitement d'air comprimé selon au moins une des revendications 1 à 3, **caractérisé en ce qu'**une vanne d'arrêt (63) mettant à disposition un dispositif d'étranglement transversal pour les soufflets pneumatiques d'un essieu avant ou d'un essieu arrière est intégrée dans l'ensemble commun (4), recevant les éléments du système de traitement d'air comprimé.

5. Système de traitement d'air comprimé selon au moins une des revendications 1 à 4, **caractérisé en ce que** des capteurs de pression (18, 21, 24, 27, 31, 91) sont intégrés dans l'ensemble (4) commun et recevant les éléments du système de traitement d'air comprimé, lesquels capteurs enregistrent les pressions dans les soufflets pneumatiques et envoie des signaux correspondants à l'unité de commande (40) électronique commune.

6. Système de traitement d'air comprimé selon une ou plusieurs des revendications 1 à 5, **caractérisé en ce que** les soupapes pouvant être commutées de façon pneumatique de l'installation à ressort pneumatique et des vannes pilotes correspondantes sont regroupées dans un ensemble formant un module, ce module pouvant être assemblé avec un module recevant les éléments du système de traitement d'air comprimé.

7. Système de traitement d'air comprimé selon une ou plusieurs des revendications 1 à 6, **caractérisé en ce qu'**un premier module (84), qui présente le déshydrateur d'air (6), le régulateur de pression (5) et une vanne de régénération (37), un second module, qui présente la vanne de protection à plusieurs circuits (7) ainsi qu'éventuellement des capteurs de pression (18, 21) pour l'enregistrement des pressions des circuits (I à IV), un troisième module (86), qui présente l'unité de commande électronique (40) et des vannes pilotes (43, 44) pouvant être actionnées électriquement, un quatrième module (87), qui présente des vannes pouvant être actionnées de façon pneumatique de l'installation à ressort pneumatique, et un cinquième module (88) qui présente les vannes pilotes (46, 48, 95, 49, 50) pouvant être actionnées électriquement, sont prévus.
